# EUROPÄISCHE PATENTSCHRIFT

(11) **EP 2 977 690 B1**
(45) Veröffentlichungstag und Bekanntmachung des Hinweises auf die Patenterteilung: **31.01.2018**
(21) Anmeldenummer: 14002568.5
(22) Anmeldetag: 24.07.2014
(51) Int. Cl.: F24J 2/05, C03C 27/06, C03B 23/09, C03B 23/13, C03B 23/207

(54) **Verfahren zum vakuumdichten Verschließen eines doppelwandigen Glasrohrs**
Method for hermetically sealing a double-walled glass tube
Procédé de fermeture étanche au vide d'un tube de verre à double paroi

(43) Veröffentlichungstag der Anmeldung: 27.01.2016
(73) Patentinhaber: Airbus Defence and Space GmbH, 85521 Ottobrunn (DE)
(72) Erfinder: STEINWANDEL Jürgen, 886980 Uhldingen-Mühlhofen (DE); PIRINGER Helmut, 85567 Oberpframmern (DE); Dr. LAURE Stefan, 70329 Stuttgart (DE)
(74) Vertreter: LKGLOBAL Lorenz & Kopf PartG mbB Patentanwälte

(56) Entgegenhaltungen:
- EP-A2- 1 302 448
- WO-A2-03/016230
- WO-A2-2013/091611
- CN-A- 102 145 976
- DE-A1-102006 024 566
- DE-B1- 2 818 259

## Beschreibung

### Gebiet der Erfindung

Die Erfindung betrifft ein Verfahren zum vakuumdichten Verschließen eines doppelwandigen Glasrohres und eine Vorrichtung zum vakuumdichten Verschließen eines doppelwandigen Glasrohres.

### Technologischer Hintergrund

Bei thermischen Solarkollektoren besteht das effizienteste System darin, dass ein doppelwandiges Glasrohr mit einer äußeren Antireflexionsschicht, zum Beispiel aus MgF₂, eingesetzt wird. Das zu erwärmende flüssige Medium (Wasser) wird dann direkt im inneren Rohr aufgeheizt. Das Medium zwischen der Doppelwand dient der Wärmeisolation. Im Idealfall ist das ein Vakuum. Bei dieser Verfahrensweise ist es erforderlich, ein an einem Ende bereits abgeschmolzenes doppelwandiges Glasrohr mit dem zunächst offenen anderen Ende in einer Vakuumkammer unmittelbar nach dem MgF₂-Aufdampfprozess unter Vakuum sicher zu verschließen.
Der letzte Verfahrensschritt zum Abschmelzen der doppelwandigen Glasrohre unter Vakuum gemäß dem bestehenden Stand der Technik erfolgt mittels Gasflamme, Erwärmung mittels Laser sowie unter Zuhilfenahme von Glasloten. Nachteilig bei den zuvor genannten Verfahren ist, dass zum Beispiel die Flammverfahren im Vakuum problematisch in der Handhabung sind, insbesondere dahingehend dass mit Verunreinigungen bestehend aus Verbrennungsrückständen zu rechnen ist. Dies führt in der Regel zu Dichtheitsproblemen. Laserverfahren sind dahingehend nachteilig, als die Fokussierung in den Vakuumrezipienten sehr aufwendig und kostenträchtig ist. Weiterhin müssen Glaslote von extern beheizt werden.
Die WO 03/016230 A2 beschreibt ein Verfahren zum Herstellen eines Elements mit einem hermetisch abgeschlossenen luftleeren Raum. Das Element weist eine Innenwand und eine Außenwand auf, zwischen denen mittels des Verfahrens ein nahezu luftleerer Raum hergestellt werden soll. Bei dem Element kann es sich insbesondere um einen Vakuum-Röhrenkollektor, der in Solaranlagen verwendet wird, handeln. Gemäß dem beschriebenen Verfahren ist vorgesehen, dass das Element vor dem hermetischen Verschließen des Raumes in eine nahezu luftleere Umgebung verbracht wird.

### Zusammenfassung der Erfindung

Es kann als eine Aufgabe der Erfindung angesehen werden, ein verbessertes Verfahren zum vakuumdichten Verschließen eines doppelwandigen Glasrohres, insbesondere bei der Fertigung und Herstellung von Solarkollektoren, anzugeben. Gemäß einem Ausführungsbeispiel ist ein Verfahren zum vakuumdichten Verschließen eines doppelwandigen Glasrohres mit einem inneren Glasrohr und einem äußeren Glasrohr gemäß dem Anspruch 1 angegeben.

Damit wird ein Verfahren zum vakuumdichten Verschließen eines doppelwandigen Glasrohres unter Vakuumbedingungen/Unterdruckbedingungen bereitgestellt, welches einfach in der Handhabung ist, keinerlei Verunreinigungen oder Verbrennungsrückstände erzeugt und auch hinsichtlich der üblichen Dichtheitsprobleme bei der Zuführung von den entsprechenden Komponenten in das Vakuum unproblematisch ist. Die elektro-konduktive Erwärmung gemäß der vorliegenden Erfindung benötigt keine Zusatzmaterialien wie zum Beispiel Lote, metallische Hilfselemente beim Laserprozess oder Sonstiges. Es erlaubt eine einfache Installation im Vakuumrezipienten, d.h. in der Vakuumkammer, und es sind lediglich minimale Vakuumdurchführungen für die Stromversorgung der zumindest zwei Heizelemente erforderlich. Ein direkter Wärmeübergang auf das doppelwandige Glasrohr und eine demzufolge schnelle Prozessführung wird ermöglicht.
Dieses Verfahren zum vakuumdichten Verschließen eines doppelwandigen Glasrohres kann insbesondere ein Fertigungsverfahren oder Teil eines Fertigungsverfahrens zur Herstellung von Solarkollektoren sein.
In einem Ausführungsbeispiel des Verfahrens wird in der Vakuumkammer der Luftraum zwischen dem inneren und dem äußeren Glasrohr evakuiert. Die zumindest zwei Heizleiter befinden sich ebenfalls in der Vakuumkammer und sind dort installiert. Selbstverständlich können in diesem und in jedem anderen Ausführungsbeispiel der vorliegenden Erfindung zwei oder auch mehrere Heizleiter bzw. Heizmodule verwendet werden. Dieser Aspekt der vorliegenden Erfindung wird im Folgenden im Kontext von Ausführungsbeispielen näher erläutert werden. Das Vorsehen der Heizleiter innerhalb der Vakuumkammer ermöglicht das Erwärmen und Verschließen der beiden Glasrohre durch direktes Anlegen der Heizleiter an eine Oberfläche des doppelwandigen Glasrohrs. Dabei können die Heizleiter auf eine innere und/oder auf eine äußere Oberfläche des Glasrohrs aufgebracht werden. Dies ermöglicht den direkten Wärmeübergang auf die Oberfläche der Glasrohre. Diese Kontaktierung der Oberfläche oder der Oberflächen mittels der elektro-konduktiven Heizleiter kann unmittelbar nach einem Evakuierungsvorgang erfolgen. Falls gewünscht, kann dabei das doppelwandige Glasrohr rotieren, so dass eine gleichmäßige Erwärmung gewährleistet wird. Dies ist Teil eines Ausführungsbeispiels, das im Folgenden noch näher erläutert werden wird.

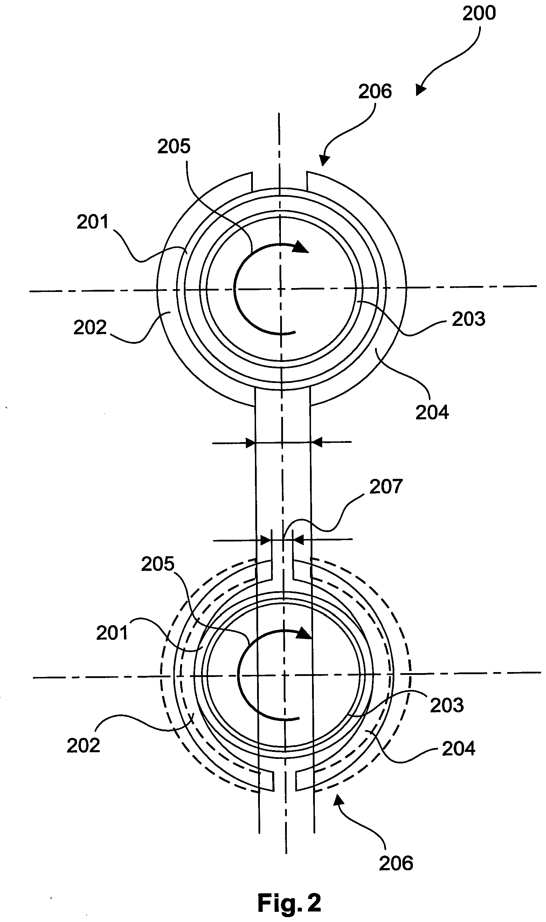

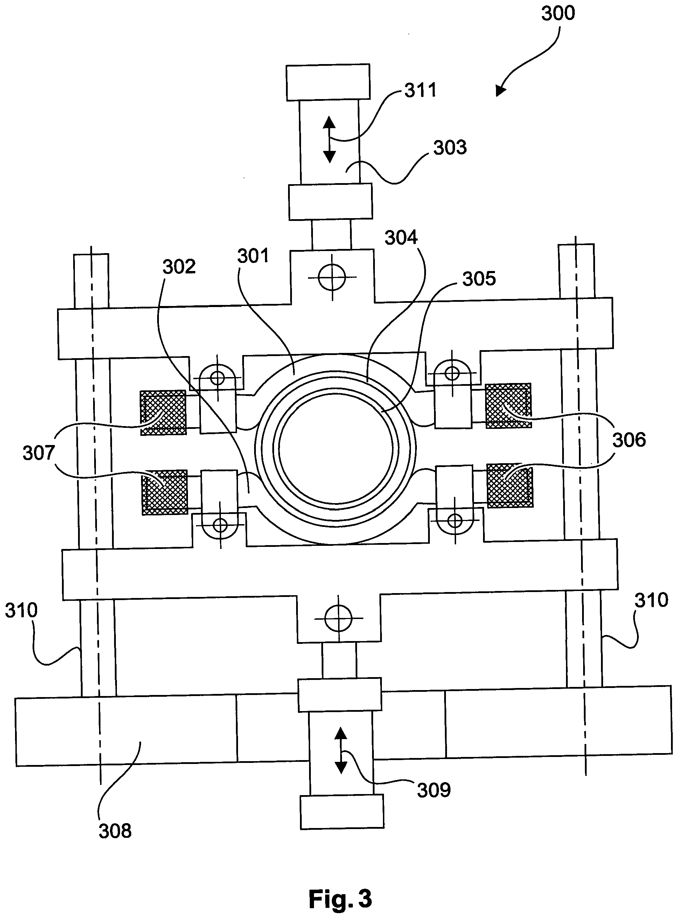

Die Verformung des ersten Endes des doppelwandigen Glasrohrs erfolgt durch eine Verschiebung der verwendeten Heizleiter. Die zwei Heizleiter, wie in Fig. 2 gezeigt, ermöglichen die Verformung durch die Verschiebung der jeweiligen Heizleiter zueinander in senkrechter Position. Nach Erzielung der gewünschten Verformung können die Heizleiter von dem doppelwandigen Glasrohr entfernt werden, so dass der Kühlprozess einsetzen kann. Die zwei Heizleiter können für die Erwärmung von Außenrohr und Innenrohr so angeordnet sein, dass eine gleichzeitige Erwärmung der beiden Rohre erfolgen kann. Außerdem besteht die zusätzliche Möglichkeit gemäß einem weiteren Ausführungsbeispiel, in einem separierten Kammerabteil, Absorptionsschichten, beispielsweise Antireflexionsbeschichtungen, aufzudampfen. Dieses Verfahren ermöglicht grundsätzlich die Reduzierung der Evakuierzeiten und somit einen rationelleren Fertigungsablauf. Mit anderen Worten wird mit diesem Verfahren gemäß der vorliegenden Erfindung ein an einem Ende bereits abgeschmolzenes doppelwandiges Glasrohr, falls gewünscht nach oder unmittelbar nach einem Aufdampfungsprozess, unter einem Unterdruck/Vakuum sicher verschlossen. Dabei ist der zuvor genannte Aufdampfprozess eine optionale Ergänzung gemäß einem weiteren Ausführungsbeispiel der Erfindung.
Beispielsweise kann die elektro-konduktive Erwärmung gemäß der vorliegenden Erfindung mit einem oder mehreren Keramikheizleitern, insbesondere mit Silizium infiltriertem Siliziumkarbid (SiSiC) Heizleitern erfolgen. Insbesondere können solche Heizleiter derart ausgeführt sein, dass ihre Kontur das zu verschließende Glasrohr formschlüssig aufnimmt. Mit anderen Worten die Heizleiter das doppelwandige Glasrohr teilweise oder ganz in seinem Umfang umschließen und an der entsprechenden Kontaktfläche für einen Wärmeübergang auf das doppelwandige Glasrohr sorgen.
Dabei kann der Prozess des Verformens und des Verschließens lediglich einige wenige Sekunden dauern. Jedoch ist es auch möglich, das erfindungsgemäße Verfahren über einen längeren Zeitraum durchzuführen. Typische Schmelztemperaturen für Gläser für Glasrohre, die im Bereich der Solarkollektoren eingesetzt werden, liegen zwischen 200 und 500°C. Eine Erhitzung des doppelwandigen Glasrohres in diesen Bereich durch die Heizleiter ist daher Teil der Erfindung. Ein bevorzugter Temperaturbereich, auf den das doppelwandige Glasrohr durch die Heizleiter gebracht wird, ist der Bereich zwischen 300°C und 350°C. Jedoch ist es auch möglich, dass andere Materialien, beispielsweise Quarzgläser, verwendet werden, wodurch die Schmelztemperatur auf 1000°C steigt. Typischerweise wird innerhalb der Vakuumkammer ein Unterdruck von 10⁻² mbar oder noch geringeren Drücken verwendet. Jedoch ist es auch möglich, einen anderen Druck zu verwenden, ohne den Schutzbereich der vorliegenden Erfindung zu verlassen.
Dabei ist es möglich, sowohl nur das äußere Glasrohr, oder nur das innere Glasrohr, oder das äußere und auch das innere Glasrohr elektro-konduktiv zu erwärmen. Anhand eines exemplarischen Ausführungsbeispiels der Fig. 2 wird gezeigt, wie von außen angelegte Teilzylinder als Heizleiter das äußere Rohr des doppelwandigen Glasrohrs berühren und an dieses Wärmeenergie abgeben. Eine anschauliche Darstellung ist ebenfalls der Fig. 3 zu entnehmen. Jedoch ist es nicht Teil der Erfindung, dass ein Heizleiter entlang der Längsachse in das doppelwandige Rohr eingeführt wird und von innen das innere Glasrohr des doppelwandigen Glasrohrs kontaktiert, erhitzt, verformt und so das gesamte Rohr verschließt. Eine Kombination dieser beiden Erhitzungs- und Verformungsmöglichkeiten ist Teil der vorliegenden Erfindung. Gemäß einem Ausführungsbeispiel wird der bereitgestellte Heizleiter auf das doppelwandige Glasrohr zugeführt/zubewegt und mittels eines elektrischen Stroms wird der Heizleiter geheizt. Aufgrund des direkten Kontakts mit dem Glasrohr wird das Glasrohr erhitzt und bis zu seinem Schmelzpunkt gebracht. Mittels einer Relativbewegung zwischen dem Glasrohr und dem Heizleiter kann das zuvor elektro-konduktiv erwärmte Glasrohr verformt werden, so dass insgesamt ein luftdicht abgeschlossenes Ende des Glasrohres erzeugt wird. Mit anderen Worten wird innerhalb des Heizleiters ein elektrischer Strom erzeugt, welcher zur Erwärmung des Heizleiters führt.
Dabei kann das Verfahren vollautomatisiert durchgeführt werden oder auch mittels eines Eingriffs des Benutzers. Beispielsweise kann das doppelwandige Glasrohr händisch in die Vakuumkammer, d.h. den Rezipienten, eingeführt werden, jedoch ist auch eine vollautomatische Einführung in die Vakuumkammer möglich. Gemäß einem weiteren Ausführungsbeispiel der Erfindung erfolgen das elektro-konduktive Erwärmen und das Verformen durch die zumindest zwei Heizleiter innerhalb der Vakuumkammer.

Mit anderen Worten wird nicht nur das doppelwandige Glasrohr durch die Heizleiter erwärmt, sondern auch durch diese verformt. Beispielsweise können die Heizleiter mittels einer mechanischen Ansteuerung, beispielsweise mittels einer hydraulischen Hebe- oder Senkvorrichtung, an welcher die Heizleiter direkt oder indirekt angeordnet sind, innerhalb der Vakuumkammer bewegt werden. Dieser Aspekt bezüglich der Bewegung der Heizleiter kann beispielhaft den Ausführungsbeispielen entnommen werden, die in Fig. 2 und 3 exemplarisch beschrieben sind.
Gemäß einem weiteren Ausführungsbeispiel der Erfindung weist das Verfahren den Schritt des Erzeugens einer Relativbewegung zwischen dem doppelwandigen Glasrohr und den Heizleitern auf, wodurch das Verformen des doppelwandigen Glasrohres an dem ersten Ende verursacht wird.

Dabei kann beispielsweise eine Translationsbewegung der Heizelemente dafür sorgen, dass die äußere Glaswand des doppelwandigen Glasrohres in seinem erwärmten Zustand nach innen auf die innere Glaswand gedrückt wird. Eine solche Translationsbewegung der beiden Heizleiter kann beispielsweise den Fig. 2 und 3 entnommen werden. Jedoch ist es auch möglich, dass eine Kombination aus Rotations- und Translationsbewegungen durch die Heizleiter durchgeführt wird.

Gemäß der Erfindung werden in dem Verfahren mindestens zwei Heizleiter verwendet. Dabei sind die beiden Heizleiter als Teilmantel zur Ummantelung jeweils eines Teils des doppelwandigen Glasrohres ausgeführt. Das Verfahren weist daher weiterhin den Schritt des zumindest teilweisen Ummantelns des äußeren Glasrohres mittels des ersten Heizleiters auf und weist den Schritt des zumindest teilweisen Ummantelns des äußeren Glasrohres mittels des zweiten Heizleiters auf. Durch ein Verschieben der beiden Heizleiter senkrecht zu einer Längsachse des doppelwandigen Glasrohres zum Verformen und luftdichten Verschließen des elektro-konduktiv erwärmten Glasrohres wird der gewünschte Verschluss des doppelwandigen Glasrohres erzielt.
Eine solche senkrechte Verschiebung der beiden teilmantelförmigen Heizleiter ist in dem beispielhaften, nicht limitierenden Ausführungsbeispiel der Fig. 2 verdeutlicht. Es wird dabei also ein Formschluss zwischen den beiden Heizleitern und dem äußeren Glasrohr des doppelwandigen Glasrohres erzeugt, so dass eine besonders gute Wärmeleitung von dem Heizleiter auf das Glasrohr möglich ist. Dies verkürzt die Dauer des Verfahrens und ermöglicht ein besonders effizientes Verschlussverfahren. Die Heizleiter der vorliegenden Erfindung können aus verschiedenen Materialien sein. Einerseits bieten sich keramische Materialien für die Heizleiter an. Bevorzugt kann Silizium infiltriertem Siliziumkarbid (SiSiC) sein. Alternativ zu SiSiC können beispielsweise Karbonfaser verstärkter Kohlenstoff (CFC) oder Karbonfaser verstärktes Siliziumcarbid verwendet werden. Dabei kann auch die C-Faser durch eine SiC- Faser ersetzt werden. Dichtgesintertes SiC als Heizleitermaterial kommt grundsätzlich in Betracht allerdings sind Stromfließeigenschaften nicht ganz so gut ausgeprägt wie bei den anderen genannten Eigenschaften.
Alternativ zu den keramischen Heizleiterwerkstoffen können auch metallische Heizleiter eingesetzt werden. Beispielsweise Nickel und/oder Nickelbasislegierungen, Tantal und/oder Tantalbasislegierungen, Niob und/oder Niobbasislegierungen. Auch ist es Teil der Erfindung, Mischungen aus den zuvor genannten Materialien zu verwenden.

Gemäß einem weiteren Ausführungsbeispiel der Erfindung sind die Heizleiter aus Keramik geformt, insbesondere aus Silizium infiltriertem Siliziumkarbid (SiSiC).

Das Material SiSiC hat aufgrund seiner guten Wärmeleitfähigkeit einen bevorzugten Einsatz gemäß diesem Ausführungsbeispiel in dem Verschlussverfahren der Erfindung. Ebenso ist die elektrische Erzeugung der Wärme in SiSiC in der Praxis besonders vorteilhaft. SiSiC ist ein Verbundmaterial bestehend aus einer SiC porösen Grundstruktur. In diese Struktur wird schmelzmetallurgisch Silizium infiltriert, wodurch eine porenfreie homogene Verbundstruktur erreicht wird. Diese Verbundstruktur stellt erfahrungsgemäß ausgezeichnete Heizleiter dar und eignet sich in bevorzugter Weise für dieses Ausführungsbeispiel der Erfindung.
Gemäß einem weiteren Ausführungsbeispiel der Erfindung erfolgt das elektro-konduktive Erwärmen durch ein direktes Anlegen der Heizleiter auf eine Oberfläche des doppelwandigen Glasrohres und nach einem Evakuierungsvorgang der Vakuumkammer.
Gemäß einem weiteren Ausführungsbeispiel der Erfindung wird ein Volumen, welches sich zwischen dem inneren Glasrohr und dem äußeren Glasrohr befindet, evakuiert.
Es sei angemerkt, dass für die vorliegende Erfindung grundsätzlich Grobvakuumbedingungen, i.e., ca. 0,01 mbar, ausreichend sind. Geringere Drucke können natürlich ebenso verwendet werden, wenn der Benutzer dies wünscht und dies für den konkreten Anwendungsfall erforderlich ist. Grundsätzlich ist allerdings zu berücksichtigen, dass die dadurch erreichbare erhöhte thermische Isolationswirkung einem kostenintensiven Fein-bzw. Hochvakuumprozess entgegensteht.

Gemäß einem weiteren Ausführungsbeispiel der Erfindung wird eine Rotationsbewegung des inneren und äußeren Glasrohres während des elektro-konduktiven Erwärmens relativ zu den Heizleitern erzeugt.

Beispielsweise ist es möglich, die Heizleiter in einer Rotationsbewegung um das statische Glasrohr herum zu bewegen. Alternativ ist es ebenso möglich, die Heizleiter statisch in der Vakuumkammer vorzusehen und eine Rotationsbewegung des Glasrohres zu erzeugen. Jedoch ist auch eine Kombination dieser beiden Rotationsbewegungen möglich. Beispielsweise kann das doppelwandige Glasrohr auf eine Rollenführung gelegt werden, welche Teil der erfindungsgemäßen Vorrichtung ist. Diese Rollenführung ist in diesem Fall ebenfalls in der Vakuumkammer angeordnet. Der Teil des Rohres, welcher nicht durch die Heizleiter erwärmt wird, kann auf einer Rollenführung zur Erzeugung der Rotation gelegt werden. Ein elektrischer Antrieb kann diese Rollenführung rotieren lassen, so dass sich insgesamt eine Rotationsbewegung des doppelwandigen Glasrohres gegenüber den zumindest zwei Heizleitern erzeugen lässt. Eine entsprechende Ansteuerung einer entsprechenden Elektronik der erfindungsgemäßen Vorrichtung ist ebenfalls Teil der vorliegenden Erfindung.

Aufgrund der Relativrotation zwischen den zumindest zwei Heizleitern und dem Glasrohr kann eine gleichmäßige Erwärmung gewährleistet werden. Dies ermöglicht ein sicheres Verschließen des erwärmten Glasbereiches, ohne dass Bereiche verformt werden, die eigentlich noch nicht die erforderliche Temperatur in dem Rohr erreicht haben.
Gemäß einem weiteren Ausführungsbeispiel der Erfindung weist das Verfahren den Schritt des Aufdampfens einer Zusatzschicht, insbesondere einer Antireflexionsschicht, auf einer äußeren Oberfläche des doppelwandigen Glasrohrs vor dem Verformen und luftdichten Verschließen des Glasrohrs auf.

Beispielsweise kann die Antireflexschicht eine MgF₂-Schicht sein. Jedoch ist es auch möglich, andere Materialien zu verwenden, um das doppelwandige Glasrohr innerhalb der Vakuumkammer zu beschichten.
Gemäß einem weiteren Ausführungsbeispiel der Erfindung ist eine Vorrichtung zum vakuumdichten Verschließen eines doppelwandigen Glasrohres mit einem inneren Glasrohr und einem äußeren Glasrohr angegeben. Die Vorrichtung ist zur Durchführung des erfindungsgemäßen Verfahrens, wie hierin beschrieben, ausgeführt und eingerichtet. Die Vorrichtung weist eine Vakuumkammer zur Bereitstellung eines gewünschten Unterdrucks innerhalb der Vakuumkammer auf. Weiterhin weist die Vorrichtung ein Halteelement zur Fixierung eines doppelwandigen Glasrohres innerhalb der Vakuumkammer auf. Ebenso weist die Vorrichtung zumindest zwei Heizleiter zur elektro-konduktiven Erwärmung des doppelwandigen Glasrohres auf, wobei das Halteelement durch die zumindest zwei Heizleiter in Form eines Teilzylindermantels bereitgestellt wird. Die Vorrichtung ist derart ausgeführt, dass das zu verschließende Glasrohr auf das Halteelement auflegbar und dadurch fixierbar ist und das an dem Halteelement fixiertes und durch den Heizleiter elektro-konduktiv erwärmtes, doppelwandiges Glasrohr an einem Ende des Glasrohres derart zu verformen, dass das erste Ende des doppelwandigen Glasrohres luftdicht verschließbar ist.
Mit anderen Worten stellt die Vorrichtung die Funktionalität bereit, ein in der Vorrichtung gehaltenes und fixiertes doppelwandiges Glasrohr mittels elektrischer Energie und Wärmeüberleitung auf das doppelwandige Glas derart im Vakuum/Unterdruck zu erwärmen, dass dieses mechanisch verformbar wird und mittels einer Bewegung der Heizleiter das doppelwandige Rohr zusammenzudrücken. Die Vorrichtung ist daher dazu ausgeführt, dieses Rohrende zu verformen und luftdicht zu verschließen. Anschließend können die Heizleiter von dem doppelwandigen Glasrohr entfernt werden, so dass der Kühlprozess einsetzen kann.
Dabei ist es in diesem und in jedem anderen Ausführungsbeispiel möglich, dass die Vorrichtung ein solches doppelwandiges Glasrohr enthält. Jedoch wird die Vorrichtung aufgrund ihrer Funktionalität mit dem doppelwandigen Glasrohr beschrieben, wodurch die strukturellen und funktionalen Merkmale und Eigenschaften der Vorrichtung angegeben sind.

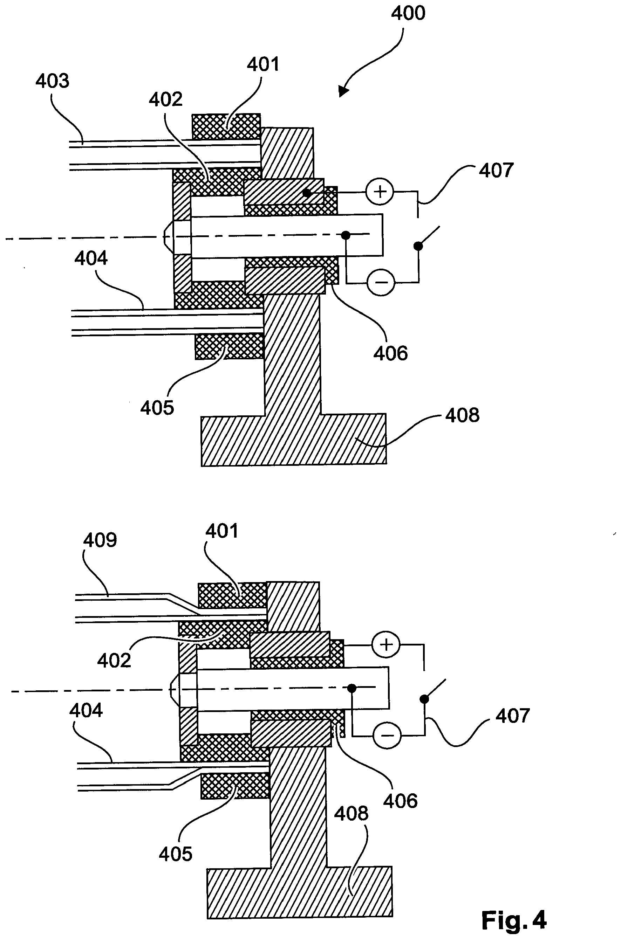

Gemäß der Erfindung weist die Vorrichtung einen ersten Teilzylindermantel als ersten Heizleiter auf und weist einen zweiten Teilzylindermantel als zweiten Heizleiter auf. Dabei sind beide Teilzylindermäntel zur direkten und formschlüssigen Kontaktierung und Ummantelung eines äußeren Glasrohres eines vom Halteelement fixierten doppelwandigen Glasrohres ausgeführt.
Dieses Ausführungsbeispiel kann dem noch detaillierteren Ausführungsbeispiel der Fig. 3 entnommen werden. Die Fig. 4 zeigt ebenso ein solches Merkmal dieses hier genannten Ausführungsbeispiels.
Gemäß einem weiteren Ausführungsbeispiel weist die Vorrichtung eine erste pneumatische Vorrichtung und eine zweite pneumatische Vorrichtung auf. Dabei ist die erste pneumatische Vorrichtung dazu ausgeführt, den ersten Heizleiter in Richtung des zweiten Heizleiters zu bewegen. Die zweite pneumatische Vorrichtung ist dazu ausgeführt, den zweiten Heizleiter in Richtung des ersten Heizleiters zu bewegen.

Mit anderen Worten wird mittels der pneumatischen Vorrichtungen eine Relativbewegung zwischen dem doppelwandigen Glasrohr und den beiden Heizleitern derart erzeugt, dass der gewünschte Verschluss mittels der gewünschten Verformung der äußeren und/oder inneren Glaswand erzielbar ist. Dabei kann in diesem und in jedem anderen Ausführungsbeispiel die Vorrichtung auf unterschiedliche Glasrohre angepasst werden. Beispielsweise können die Abstände der verwendeten Heizleiter verringert oder vergrößert werden, so dass unterschiedliche Durchmesser unterschiedlicher Glasrohre bearbeitet werden können.

Gemäß einem weiteren Ausführungsbeispiel der Erfindung sind die Heizleiter dazu ausgeführt, eine Bewegung während des elektro-konduktiven Erwärmens derart durchzuführen, dass die Verformung und der Verschluss des doppelwandigen Glasrohres erreicht werden.

Dabei können die Heizleiter auch dazu ausgeführt sein, nach einer Erwärmung eine Bewegung durchzuführen. Die Bewegung kann durch unterschiedliche mechanische und/oder elektrische Antriebe erfolgen. Beispielsweise können durch eine pneumatische Vorrichtung die Heizleiter zu einer Translationsbewegung angesteuert werden, so dass das Glasrohr zusammengepresst wird. Das Halteelement der Vorrichtung durch die zumindest zwei Heizleiter bereitgestellt. Das Halteelement ist in Form eines Teilzylindermantels ausgeführt.

Mit anderen Worten stellen die Heizleiter sowohl die Funktionalität der Fixierung des doppelwandigen Glasrohres als auch die elektro-konduktive Erwärmung des Glasrohres bereit. Wie der Fig. 3 beispielhaft entnommen werden kann, liegt das Glasrohr dort auf dem unteren teilzylinderförmigen Heizleiter auf und wird durch dieses gehalten. Ebenso erfährt das doppelwandige Glasrohr durch den oberen teilzylinderförmigen Heizleiter eine weitere Fixierung, wodurch Stabilität während des Prozesses erreicht wird.

Gemäß einem weiteren Ausführungsbeispiel weist die Vorrichtung eine Stromversorgungseinheit auf, welche mit einer Arbeitsspannung von 20 bis 400 Volt arbeitet. Die Stromversorgungseinheit ist eine Gleichstromquelle. Mit anderen Worten wird das Glasrohr durch den/die Heizleiter bei einer Arbeitsspannung von 20 bis 400 Volt erwärmt.

Gemäß einem weiteren Ausführungsbeispiel weist die Vorrichtung als Stromversorgungseinheit eine Wechselstromeinheit auf. Dies ist insbesondere dann angezeigt, wenn höhere Spannungsniveaus gefahren werden sollen. Damit können eventuelle Plasmaüberschläge reduziert werden.

### Kurze Beschreibung der Figuren

Nachfolgend wird anhand der beigefügten Zeichnungen näher auf Ausführungsbeispiele der Erfindung eingegangen.
- **Fig. 1**: zeigt eine schematische Darstellung eines Flussdiagramms eines Verfahrens zum vakuumdichten Verschließen eines doppelwandigen Glasrohres gemäß einem Ausführungsbeispiel der Erfindung.
- **Fig. 2**: zeigt einen Querschnitt durch einen Teil einer Vorrichtung zum vakuumdichten Verschließen eines doppelwandigen Glasrohres gemäß einem Ausführungsbeispiel der Erfindung.
- **Fig. 3**: zeigt eine Vorrichtung zum vakuumdichten Verschließen eines doppelwandigen Glasrohres gemäß einem Ausführungsbeispiel der Erfindung.
- **Fig. 4**: zeigt ein weiteres Ausführungsbeispiel einer Vorrichtung zum vakuumdichten Verschließen eines doppelwandigen Glasrohres.

Die Erfindung wird im Folgenden unter Hinweis auf die beigefügten Figuren anhand schematischer Darstellungen bevorzugte Ausführungsbeispiele noch einmal näher erläutert. Hieraus ergeben sich auch weitere Einzelheiten und Vorteile der Erfindung.
Die Darstellungen in den Figuren sind schematisch und nicht maßstäblich. In den Figurenbeschreibungen werden für die gleichen oder ähnlichen Elemente die gleichen Bezugsziffern verwendet.

### Detaillierte Beschreibung von Ausführungsbeispielen

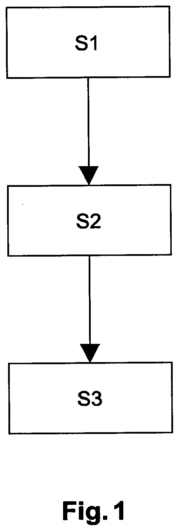

Das Verfahren der Fig. 1 ist ein Verfahren zum vakuumdichten Verschließen eines doppelwandigen Glasrohres und kann insbesondere als ein Fertigungsverfahren oder als Teil eines Fertigungsverfahrens zur Herstellung von Solarkollektoren angesehen werden. In der Fig. 1 ist mit Schritt S1 das Bereitstellen des doppelwandigen Glasrohres innerhalb einer Vakuumkammer bei einem gewünschten Unterdruck innerhalb der Vakuumkammer gezeigt. Ein solches Glasrohr kann als Solarkollektor betrachtet werden. In Schritt S2 wird das äußere und/oder das innere Glasrohr elektro-konduktiv erwärmt, und zwar an einem ersten Ende des doppelwandigen Glasrohres. Dies erfolgt mittels des Einsatzes zumindest zweier Heizleiter. Das Verformen des elektro-konduktiv erwärmten Glasrohres an dem ersten Ende des doppelwandigen Glasrohres erfolgt derart, dass sich das äußere Glasrohr und das innere Glasrohr berühren und dadurch das erste Ende des doppelwandigen Glasrohres luftdicht verschlossen wird. Dieser Schritt des Verformens und des Verschließens ist in Fig. 1 mit Schritt S3 gezeigt.

Dabei sei angemerkt, dass dieses Ausführungsbeispiel durch verschiedenste zuvor und im Nachfolgenden beschriebene Schritte ergänzt werden kann. Beispielsweise kann eine Relativbewegung zwischen dem doppelwandigen Glasrohr und den Heizleitern erzeugt werden, wodurch das doppelwandige Glasrohr an dem ersten Ende verformt und verschlossen wird. Ebenso kann ein Volumen, das sich zwischen dem inneren und dem äußeren Glasrohr befindet, evakuiert werden. Zusätzlich oder alternativ kann eine Rotationsbewegung des doppelwandigen Glasrohres relativ zu den Heizleitern erzeugt werden. Dies kann durch beispielsweise eine Rollenvorrichtung erreicht werden, welche ebenfalls Teil einer entsprechenden Vakuumkammer einer erfindungsgemäßen Vorrichtung ist. Das Verfahren gemäß Fig. 1 ermöglicht ein Erwärmen und Verschließen der beiden Glasrohre durch direktes Anlegen der Heizleiter, insbesondere Keramikheizleiter und ermöglicht einen direkten Wärmeübergang auf die Oberfläche der Glasrohre unmittelbar nach dem Evakuiervorgang. Beispielsweise kann die Verformung durch die Verschiebung der jeweiligen Heizleiter zueinander erfolgen. Ebenso besteht die Möglichkeit, in einem separierten Kammerabteil Absorptionsschichten aufzudampfen. Damit ermöglicht das Verfahren der Fig. 1 die Reduzierung der Evakuierzeiten und somit einen rationelleren Fertigungsablauf. Ebenso ist eine einfache Installation in der Vakuumkammer möglich. Lediglich die Stromversorgung der Heizleiter ist in die Vakuumzone erforderlich. Ein direkter Wärmeübergang auf das doppelwandige Glasrohr und eine demzufolge schnelle Prozessführung wird durch das Verfahren der Fig. 1 ermöglicht.
Fig. 2 zeigt einen Teil einer Vorrichtung 200 zum vakuumdichten Verschließen eines doppelwandigen Glasrohres 206. Dabei zeigt die Fig. 2 im oberen Teil den Zustand des doppelwandigen Glasrohres 206 und der entsprechenden Kontaktierung mit den Heizleitern 202, 204 vor einer Verformung und vor dem Verschließen des doppelwandigen Glasrohres. Im Gegensatz dazu ist im unteren Teil der Fig. 2 das doppelwandige Glasrohr 206 nach der Verformung und nach dem luftdichten des Glasrohres gezeigt. Die beiden Heizleiter 202, 204 des Beispiels der Fig. 2 sind derart ausgeführt sein, dass ihre Kontur das zu verschließende Glasrohr 206, insbesondere das äußere Teilrohr 201 formschlüssig aufnimmt. Das doppelwandige Glasrohr wird durch die beiden Heizleiter teilweise in seinem Umfang umschlossen und an der Kontaktfläche findet der gewünschte Wärmeübergang statt. Es wird dabei also ein Formschluss zwischen den beiden Heizleitern und dem äußeren Glasrohr des doppelwandigen Glasrohres erzeugt, so dass eine besonders gute Wärmeleitung von dem Heizleiter auf das Glasrohr möglich ist. Fig. 2 zeigt in einem Querschnitt das äußere Glasrohr 201 und das innere Glasrohr 203. Ebenso ist ein erster Heizleiter 202 und ein zweiter Heizleiter 204 jeweils in Aufheizposition, das heißt in Kontakt mit dem doppelwandigen Glasrohr 206, im oberen Teil der Fig. 2 gezeigt. Dabei bezeichnet der Pfeil 205, dass eine Relativbewegung, insbesondere eine Relativrotation zwischen den Heizleitern 202, 204 und zwischen dem doppelwandigen Glasrohr 206, erzeugt wird.

Im unteren Teil der Fig. 2 ist das äußere Glasrohr 201 nach der Verformung gezeigt und ebenso ist das innere Glasrohr 203 nach der Verformung gezeigt. Ebenso ist im unteren Teil der Fig. 2 der erste Heizleiter 202 in Verformungsposition gezeigt und auch der zweite Heizleiter 204 ist in Verformungsposition in Fig. 2 dargestellt. Mit anderen Worten ist diese Vorrichtung dazu ausgeführt, ein an dem Halteelement (nicht gezeigt in Fig. 2) fixiertes und durch die Heizleiter 202, 204 elektro-konduktiv erwärmtes, doppelwandiges Glasrohr 206 an einem Ende des Glasrohres derart zu verformen, dass das erste Ende des doppelwandigen Glasrohres luftdicht verschlossen wird. Dieser Zustand ist im unteren Teil der Fig. 2 dargestellt. Dabei sei angemerkt, dass der erste Heizleiter 202 in seiner Position im oberen Teil der Fig. 2 identisch ist mit dem Heizleiter 202 in der Verformungsposition im unteren Teil der Fig. 2. Gleiches gilt für den zweiten Heizleiter 204 gezeigt im oberen Bild und den zweiten Heizleiter 204 gezeigt im unteren Bild der Fig. 2. Die Vorrichtung 200 ist zum Erzeugen einer Relativbewegung zwischen dem doppelwandigen Glasrohr und den Heizleitern 202, 204 ausgeführt, wodurch das Verformen des doppelwandigen Glasrohres an dem ersten Ende verursacht wird. Dabei ist im unteren Teil der Fig. 2 mit dem Bezugszeichen 207 gezeigt, dass aufgrund der Verschiebung der beiden Heizleiter am Ende des Verfahrens diese näher zueinander angeordnet sind als zu Beginn des Verfahrens, wie es im oberen Teil der Fig. 2 gezeigt ist. In diesem Beispiel der Fig. 2 werden die beiden Heizlader jeweils in radialer Richtung aufeinander zubewegt. Dies kann beispielsweise durch eine hydraulische oder pneumatische Mechanik zur Erzeugung der Bewegung realisiert werden. Eine beispielhafte Ausführungsform ist anhand der Fig. 3 erläutert.

Fig. 3 zeigt ein weiteres Ausführungsbeispiel einer Vorrichtung 300 zum vakuumdichten Verschließen eines doppelwandigen Glasrohres. Dabei wird die Vorrichtung 300 mittels ihrer Komponenten und Funktionalitäten mit dem doppelwandigen Glasrohr beschrieben, wodurch strukturelle und funktionale Merkmale und Eigenschaften der Vorrichtung 300 angegeben sind. Dabei weist die Vorrichtung 300 einen ersten oberen Heizleiter 301 für das Außenrohr auf und ist in Fig. 3 in der Aufheizposition gezeigt. Ebenso weist die Vorrichtung 300 einen unteren Heizleiter für das Außenrohr auf, welcher ebenso in Aufheizposition dargestellt ist. Die Vorrichtung weist einen oberen Pneumatikzylinder 303 auf, mittels welchem eine Vertikalbewegung des oberen Heizleiters erzeugt werden kann. Diese Translationsbewegung ist mit dem Pfeil 311 in Fig. 3 angedeutet. Das äußere Glasrohr ist mit 304 und das innere Glasrohr mit 305 in Fig. 3 dargestellt. Ebenso sind Elektroanschlüsse 306 und 307 auf der rechten und linken Seite der Vorrichtung 300 angeordnet. Wie der Fig. 3 entnommen werden kann, ist der untere Heizleiter 302 in Form eines Teilzylindermantels ausgeführt und stellt ein Halteelement für das doppelwandige Glasrohr bereit. Ebenso fixiert der obere Heizleiter 301 die Position des doppelwandigen Glasrohres. Der untere Pneumatikzylinder 309 ermöglicht in analoger Weise zum oberen Pneumatikzylinder 303 eine Translationsbewegung des unteren Heizleiters. Dabei ist eine Grundplatte 308 in der Vorrichtung 300 vorhanden, auf welcher seitlich Führungsstäbe 310 angeordnet sind, welche die Translationsbewegungen der Heizleiter, die durch die Pneumatikzylinder 303 und 309 erzeugt werden, führen. Gemäß einem weiter ausgebildeten Ausführungsbeispiel der Vorrichtung der Fig. 3 ist eine Rollenführung in der Vorrichtung 300 vorhanden, welche eine Rotation des doppelwandigen Glasrohres während der Erwärmung erzeugen kann. Eine entsprechende elektrische Ansteuerung aller Komponenten, insbesondere der Pneumatikzylinder und der Rotationsvorrichtung, kann ebenfalls enthalten sein. Ebenso ist der Fig. 3 zu entnehmen, dass die beiden Teilzylindermäntel, in Form des ersten und zweiten Heizleiters, in direktem und formschlüssigen Kontakt und der Ummantelung des äußeren Glasrohres ausgeführt sind. Insgesamt ermöglicht diese Vorrichtung die Reduzierung der Evakuierzeiten bei der Herstellung von Solarkollektoren, insbesondere bei der vakuumdichten Verschließung des doppelwandigen Glasrohres, das als Solarkollektor verwendet wird.

Fig. 4 zeigt ein weiteres Ausführungsbeispiel einer Vorrichtung 400 zum vakuumdichten Verschließen eines doppelwandigen Glasrohres. Die Vorrichtung 400 weist einen oberen Heizleiter 401 für das Außenrohr und einen Heizleiter 402 für das Innenrohr auf. Dabei ist das Außenrohr mit 403 bezeichnet und das Innenrohr ist mit 404 bezeichnet. Ebenso ist der untere Heizleiter 405 für das Außenrohr 403 in der Fig. 4 dargestellt. Die Buchse 406 wird zur Isolation verwendet. Die Buchse 406 hat die Funktion eines elektrischen Isolators. Der Benutzer der Erfindung kann das Material der Buchse 406 bedarfsgerecht wählen. Aufgrund der relativ hohen Prozesstemperaturen kommen Isolatoren z.B. aus Kunststoff meist nicht in Betracht. Gut geeignet sind beispielsweise oxydkeramische Materialien, z.B. Aluminiumoxid, Zirkonoxid, Yttriumoxid, Siliziumdioxid, oder deren Mischungen. Darüber hinaus kommt noch die Substanzklasse der Alumo-Silikate in Betracht, z.B. Mullit und Kordierit. Die Stromversorgungseinheit 407 ist vorzugsweise als Gleichstromquelle/ Gleichstromprozess ausgeführt. Aufgrund von möglichen Plasmadurchschlägen sollten ca. 800 Volt nicht überschritten werden. In manchen Fällen sind aber auch Spannungen größer als 800 Volt möglich. Prozesstaugliche Arbeitsspannungen in Abhängigkeit vom spezifischen Widerstand der Heizleiter, deren Querschnittsfläche und der Länge liegen im Bereich 20 bis 400 Volt. Eine Ausführung als Wechselstromeinheit ist ebenfalls möglich und insbesondere dann angezeigt, wenn höhere Spannungsniveaus gefahren werden sollen. Damit können eventuelle Plasmaüberschläge reduziert werden.

Die Vorrichtung 400 der Fig. 4 weist eine Konsole 408 aus mineralischem Werkstoff auf, der bis 1400°C elektrisch isolierend ist. Dabei können unterschiedliche Materialien zum Einsatz kommen. Dabei ist der obere, zuvor beschriebene Teil der Fig. 4 derjenige Zustand der erfindungsgemäßen Vorrichtung innerhalb der Aufheizphase. Im unteren Teil der Fig. 4 wird nun der Zustand der erfindungsgemäßen Vorrichtung 400 innerhalb der Verformungsphase dargestellt. Dabei ist das Außenrohr 409 in seiner verformten Konfiguration dargestellt. Ebenso ist der obere Heizleiter für das Außenrohr 401 in einer nach unten bewegten Position dargestellt. Der Heizleiter für das Innenrohr 402 ist ebenso im unteren Teil dargestellt sowie auch das Innenrohr 404 und der untere Heizleiter 405 für das Außenrohr. Die Konsole 408 ist ebenso im unteren Teil der Fig. 4 dargestellt. Das Gleiche gilt für die Buchse 406 und System 407.

Die vorliegende Erfindung lässt sich grundsätzlich für verschiedene Arten eines Verfahrens zum vakuumdichten Verschließen eines doppelwandigen Glasrohrs nutzen und ist nicht auf die angegebene Kombination der Merkmale des Patentanspruchs 1 und der abhängigen Patentansprüche beschränkt. Es ergeben sich darüber hinaus weitere Möglichkeiten, einzelne Merkmale, wenn sie sich aus den Patentansprüchen, der Beschreibung der Ausführungsbeispiele oder unmittelbar aus der Zeichnung ergeben, miteinander zu kombinieren.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum vakuumdichten Verschließen eines doppelwandigen Glasrohrs (206) mit einem inneren Glasrohr (203, 305, 404) und einem äußeren Glasrohr (201, 304, 403, 409), das Verfahren aufweisend die Schritte
Bereitstellen des doppelwandigen Glasrohrs (206) innerhalb einer Vakuumkammer bei einem gewünschten Unterdruck innerhalb der Vakuumkammer (S1),
Fixieren des doppelwandigen Glasrohrs (206) mittels eines in der Vakuumkammer bereitgestellten Halteelements,
elektro-konduktives Erwärmen (S2) des äußeren und/oder des inneren Glasrohres (206) an einem ersten Ende des doppelwandigen Glasrohrs (206) mittels zumindest zwei Heizleiter (202, 204, 301, 302, 401, 405); wobei das Halteelement durch die zumindest zwei Heizleiter (202, 204, 301, 302, 401, 405) in Form eines Teilzylindermantels bereitgestellt wird; und
wobei das äußere Glasrohr (201, 304, 403, 409), mittels eines ersten (202, 301, 401) der zumindest zwei Heizleiter (202, 204, 301, 302, 401, 405) zumindest teilweise ummantelt wird, wobei das äußere Glasrohr (201, 304, 403, 409) mittels eines zweiten (204, 302, 405) der zumindest zwei Heizleiter (202, 204, 301, 302, 401, 405) teilweise ummantelt wird, und
Verschieben des ersten (202, 301, 401) und des zweiten (204, 302, 405) Heizleiters zueinander senkrecht zu einer Längsachse des doppelwandigen Glasrohres (206) zum Verformen und luftdichten Verschließen des elektro-konduktiv erwärmten doppelwandigen Glasrohrs (206) derart, dass sich das äußere Glasrohr (201, 304, 403, 409) und das innere Glasrohr (203, 305, 404) berühren und dadurch das erste Ende des doppelwandigen Glasrohrs (206) luftdicht verschlossen wird (S3).

2. Verfahren nach einem der vorherigen Ansprüche, wobei die zumindest zwei Heizleiter (202, 204, 301, 302, 401, 405) aus Keramik, insbesondere aus Silizium infiltriertes Siliziumkarbid (SiSiC) ist.

3. Verfahren nach einem der vorherigen Ansprüche, wobei das elektro-konduktive Erwärmen durch ein direktes Anlegen der zumindest zwei Heizleiter (202, 204, 301, 302, 401, 405) auf eine Oberfläche des doppelwandigen Glasrohres (206) und nach einem Evakuierungsvorgang der Vakuumkammer erfolgt.

4. Verfahren nach einem der vorherigen Ansprüche, das Verfahren weiterhin aufweisend den Schritt
Evakuieren eines Volumens, welches sich zwischen dem inneren Glasrohr (203, 305, 404) und dem äußeren Glasrohr (201, 304, 403, 409) befindet.

5. Verfahren nach einem der vorherigen Ansprüche, das Verfahren weiterhin aufweisend den Schritt
Erzeugen einer Rotationsbewegung des inneren und äußeren Glasrohrs (203, 305, 404, 201, 304, 403, 409) während des elektro-konduktiven Erwärmens relativ zu den zumindest zwei Heizleitern (202, 204, 301, 302, 401, 405).

6. Verfahren nach einem der vorherigen Ansprüche, das Verfahren weiterhin aufweisend den Schritt
Aufdampfen einer Zusatzschicht, insbesondere einer Antireflexionsschicht, auf einer äußeren Oberfläche des doppelwandigen Glasrohrs (206) vor dem Verformen und luftdichten Verschließen des doppelwandigen Glasrohrs (206).

7. Vorrichtung (300,400) zum vakuumdichten Verschließen eines doppelwandigen Glasrohrs (206) mit einem inneren Glasrohr (203, 305, 404) und einem äußeren Glasrohr (201, 304, 403, 409), die Vorrichtung (300, 400) aufweisend eine Vakuumkammer zur Bereitstellung eines gewünschten Unterdrucks innerhalb der Vakuumkammer,
ein Halteelement zur Fixierung eines doppelwandigen Glasrohrs (206) innerhalb der Vakuumkammer, zumindest zwei Heizleiter (202, 204, 301, 302, 401, 405) zur elektro-konduktiven Erwärmung des doppelwandigen Glasrohrs (206) an einem ersten Enden des doppelwandigen Glasrohrs (206); wobei das Halteelement durch die zumindest zwei Heizleiter (202, 204, 301, 302, 401, 405) in Form eines Teilzylindermantels zur direkten und formschlüssigen Kontaktierung des doppelwandigen Glasrohres (201, 304, 403, 409) bereitgestellt wird, und wobei ein erster (202, 301, 401) der zumindest zwei Heizleiter dazu ausgeführt ist, das äußere Glasrohr (201, 304, 403, 409) zumindest teilweise umzumanteln, und wobei ein zweiter (204, 302, 405) der zumindest zwei Heizleiter dazu ausgeführt ist, das äußere Glasrohr (201, 304, 403, 409) zumindest teilweise umzumanteln, und wobei die Vorrichtung (300, 400) dazu ausgeführt ist, dass das zu verschließende doppelwandige Glasrohr (206) auf das Halteelement auflegbar und dadurch fixierbar ist, und wobei die Vorrichtung (300, 400) dazu ausgeführt ist, den ersten (202, 301, 401) und den zweiten (204, 302, 405) Heizleiter senkrecht zu einer Längsachse des doppelwandigen Glasrohres (206) zu verschieben, wobei das an dem Halteelement fixierte und durch die zumindest zwei Heizleiter (202, 204, 301, 302, 401, 405) elektro-konduktiv erwärmte, doppelwandige Glasrohr (206) am ersten Ende des doppelwandigen Glasrohrs (206) derart verformt wird, dass das erste Ende des doppelwandigen Glasrohrs (206) luftdicht verschlossen wird.

8. Vorrichtung nach Anspruch 7, die Vorrichtung (300, 400) weiterhin aufweisend eine erste pneumatische Vorrichtung (303),
eine zweite pneumatische Vorrichtung (309),
wobei die erste pneumatische Vorrichtung (303) dazu ausgeführt ist, den ersten Heizleiter (202, 301, 401) in Richtung des zweiten Heizleiters (204, 302, 405) zu bewegen, und wobei die zweite pneumatische Vorrichtung (309) dazu ausgeführt ist, den zweiten Heizleiter (204, 302, 405) in Richtung des ersten Heizleiters (202, 301, 401) zu bewegen.

9. Vorrichtung nach Anspruch 7 oder 8, wobei die zumindest zwei Heizleiter (202, 204, 301, 302, 401, 405) dazu ausgeführt sind eine Bewegung (311) während des elektro-konduktiven Erwärmens derart durchzuführen, dass die Verformung und der Verschluss des doppelwandigen Glasrohres (206) erreicht werden.

## Claims

1. Method for sealing a double-walled glass tube (206) in a vacuum-tight manner, the glass tube having an inner glass tube (203, 305, 404) and an outer glass tube (201, 304, 403, 409), the method comprising the steps of:
providing the double-walled glass tube (206) inside a vacuum chamber at a desired negative pressure inside the vacuum chamber (S1);
fixing the double-walled glass tube (206) by a holding element provided in the vacuum chamber;
electro-conductive heating (S2) the outer and/or inner glass tube (206) at a first end of the double-walled glass tube (206) by at least two heating conductors (202, 204, 301, 302, 401, 405);
wherein the holding element is provided by the at least two heating conductors (202, 204, 301, 302, 401, 405) in form of a partial cylinder shell; and
wherein the outer glass tube (201, 304, 403, 409) is covered at least partially by a first (202, 301, 401) of the at least two heating conductors (202, 204, 301, 302, 401, 405);
wherein the outer glass tube (201, 302, 403, 409) is covered at least partially by a second (204, 302, 405) of the at least two heating conductors (202, 204, 301, 302, 401, 405); and
displacing of the first (202, 301, 401) and the second (204, 302, 405) heating conductor towards each other perpendicularly to a longitudinal axis of the double-walled glass tube (206) in order for deforming and air-tight sealing of the electro-conductively heated glass tube (206) such that the outer glass tube (201, 304, 43, 409) and the inner glass tube (203, 305, 404) touch each other, thereby sealing (S3) the first end of the double-walled glass tube (206) in an air-tight manner.

2. Method according to one of the preceding claims, wherein the at least two heating conductors (202, 204, 301, 302, 401, 405) are made of ceramic, in particular of silicon infiltrated silicon carbide (SiSiC).

3. Method according to one of the preceding claims, wherein the electro conductive heating is accomplished by a direct application of the at least two heating conductors (202, 204, 301, 302, 401, 405) onto a surface of the double-walled glass tube (206) and after an evacuation process of the vacuum chamber.

4. Method according to one of the preceding claims, the method further comprising the step of:
evacuating a volume, which is arranged between the inner glass tube (203, 305, 404) and the outer glass tube (201, 304, 403, 409).

5. Method according to one of the preceding claims, the method further comprising the step of:
creating a rotational movement of the inner and outer glass tube (203, 305, 404, 201, 304, 403, 409) relatively to the at least two heating conductors (202, 204, 301, 302, 401, 405) during the electro-conductive heating.

6. Method according to one of the preceding claims, the method further comprising the step of:
vapor depositing of an extra layer, in particular an antireflection layer, onto an outer surface of the double-walled glass tube (206) before the deformation and air-tight sealing of the double-walled glass tube (206).

7. Apparatus (300, 400) for vacuum-tight sealing of a double-walled glass tube (206) having an inner glass tube (203, 305, 404) and an outer glass tube (201, 304, 403, 409), the apparatus comprising:
a vacuum chamber for providing a desired negative pressure inside the vacuum chamber;
a holding element for fixation of a double-walled glass tube (206) inside the vacuum chamber;
at least two heating conductors (202, 204, 301, 302, 401, 405) for electro-conductive heating of the double-walled glass tube (206) at a first end of the double-walled glass tube (206);
wherein the holding element is provided by the at least two heating conductors (202, 204, 301, 302, 401, 405) in the form of a partial cylinder shell to contact the double-walled glass tube (201, 304, 403, 409) in a direct and form fitting manner, and wherein a first (202, 301, 401) of the at least two heating conductors is configured to at least partially cover the outer glass tube (201, 304, 403, 409), and wherein a second (204, 302, 405) of the at least two heating conductors is configured to at least partially cover the outer glass tube (201, 304, 403, 409), and
wherein the apparatus (300, 400) is configured such that the to be sealed double-walled glass tube (206) is placeable onto the holding element and thereby fixable, and wherein the apparatus (300, 400) is configured to displace the first (202, 301, 401) and the second (204, 302, 405) heating conductor perpendicularly to a longitudinal axis of the double-walled glass tube (206),
wherein the double-walled glass tube (206), which is fixed at the holding element and heated electro-conductively by the at least two heating conductors (202, 204, 301, 302, 401, 405), is deformed at the first end of the double walled glass tube (206) such that the first end of the double-walled glass tube (206) is sealed in an air-tight manner.

8. Device according to claim 7, the device (300, 400) further comprising:
a first pneumatic device (303);
a second pneumatic device (309);
wherein the first pneumatic device (303) is configured to move the first heating conductor (202, 301, 401) in direction of the second heating conductor (204, 302, 405); and
wherein the second pneumatic device (309) is configured to move the second heating conductor (204, 302, 405) in direction of the first heating conductor (202, 301, 401).

9. Device according to claim 7 or 8, wherein the at least two heating conductors (202, 204, 301, 302, 401, 405) are configured to operate a movement (311) during the electro conductive heating such that the deforming and the sealing of the double-walled glass tube (206) are achieved.

## Revendications

1. Procédé pour fermer un tube de verre à double paroi (206) de manière étanche au vide comportant un tube de verre intérieur (203, 305, 404) et un tube de verre extérieur (201, 304, 403, 409), le procédé comprenant les étapes consistant à :
fournir le tube de verre à double paroi (206) à l'intérieur chambre à vide sous un vide souhaité à l'intérieur de la chambre à vide (S1),
fixer le tube de verre à double paroi (206) au moyen d'un élément de retenue fourni dans la chambre à vide, chauffer par électroconduction (S2) le tube de verre extérieur et/ou intérieur (206) au niveau d'une première extrémité du tube de verre à double paroi (206) au moyen d'au moins deux conducteurs chauffants (202, 204, 301, 302, 401, 405) ;
dans lequel l'élément de retenue est fourni par l'intermédiaire des au moins deux conducteurs chauffants (202, 204, 301, 302, 401, 405) sous la forme d'une enveloppe cylindrique partielle ; et
dans lequel le tube de verre extérieur (201, 304, 403, 409) est enveloppé au moins partiellement au moyen d'un premier (202, 301, 401) des au moins deux conducteurs chauffants (202, 204, 301, 302, 401, 405),
dans lequel le tube de verre extérieur (201, 304, 403, 409) est enveloppé au moins partiellement au moyen d'un deuxième (204, 302, 405) des au moins deux conducteurs chauffants (202, 204, 301, 302, 401, 405), et déplacer le premier (202, 301, 401) et le deuxième (204, 302, 405) conducteurs chauffants perpendiculairement l'un par rapport à l'autre par rapport à un axe longitudinal du tube de verre à double paroi (206) afin de déformer et de fermer de manière étanche à l'air le tube de verre à double paroi (206) chauffé par électroconduction de telle sorte que le tube de verre extérieur (201, 304, 403, 409) et le tube de verre intérieur (203, 305, 404) se touchent pour ainsi que la première extrémité du tube de verre à double paroi (206) soit fermée de manière étanche à l'air (S3).

2. Procédé selon une des revendications précédentes,
dans lequel les au moins deux conducteurs chauffants (202, 204, 301, 302, 401, 405) sont en céramique, en particulier en carbure de silicium infiltré par silicium (SiSiC).

3. Procédé selon une des revendications précédentes,
dans lequel le chauffage par électroconduction se fait par l'intermédiaire d'une application directe des au moins deux conducteurs chauffants (202, 204, 301, 302, 401, 405) sur une surface du tube de verre à double paroi (206) et après un processus d'évacuation de la chambre à vide.

4. Procédé selon une des revendications précédentes, le procédé comprenant en outre l'étape consistant à :
évacuer un volume qui est situé entre le tube de verre intérieur (203, 305, 404) et le tube de verre extérieur (201, 304, 403, 409).

5. Procédé selon une des revendications précédentes, le procédé comprenant en outre l'étape consistant à :
générer un mouvement de rotation du tube de verre intérieur et extérieur (203, 305, 404, 201, 304, 403, 409) pendant le chauffage par électroconduction par rapport aux au moins deux conducteurs chauffants (202, 204, 301, 302, 401, 405).

6. Procédé selon une des revendications précédentes, le procédé comprenant en outre l'étape consistant à :
déposer en phase vapeur une couche supplémentaire, en particulier une couche antireflet, sur une surface extérieure du tube de verre à double paroi (206) avant la déformation et la fermeture étanche à l'air du tube de verre à double paroi (206).

7. Dispositif (300, 400) de fermeture étanche au vide d'un tube de verre à double paroi (206) comportant un tube de verre intérieur (203, 305, 404) et un tube de verre extérieur (201, 304, 403, 409), le dispositif (300, 400) comprenant :
une chambre à vide pour fournir un vide souhaité à l'intérieur de la chambre à vide,
un élément de retenue pour fixer un tube de verre à double paroi (206) à l'intérieur de la chambre à vide,
au moins deux conducteurs chauffants (202, 204, 301, 302, 401, 405) pour chauffer par électroconduction le tube de verre à double paroi (206) au niveau d'une première extrémité du tube de verre à double à paroi (206) ;
dans lequel l'élément de retenue est fourni par l'intermédiaire des au moins deux conducteurs chauffants (202, 204, 301, 302, 401, 405) sous la forme d'une enveloppe cylindrique partielle pour venir en contact direct et par complémentarité de forme avec le tube de verre à double paroi (201, 304, 403, 409), et
dans lequel un premier (202, 301, 401) des au moins deux conducteurs chauffants est configuré de manière à envelopper au moins partiellement le tube de verre extérieur (201, 304, 403, 409), et dans lequel un deuxième (204, 302, 405) des au moins deux conducteurs est configuré de manière à envelopper au moins partiellement le tube de verre extérieur (201, 304, 403, 409), et
dans lequel le dispositif (300, 400) est configuré de manière à pouvoir appliquer et ainsi fixer sur l'élément de retenue le tube de verre à double paroi (206) qui doit être fermé, et
dans lequel le dispositif (300, 400) est configuré de manière à déplacer le premier (202, 301, 401) et le deuxième (204, 302, 405) conducteurs chauffants perpendiculairement par rapport à un axe longitudinal du tube de verre à double paroi (206),
dans lequel le tube de verre à double paroi (206) fixé sur l'élément de retenue et chauffé par électroconduction par l'intermédiaire des au moins deux conducteurs chauffants (202, 204, 301, 302, 401, 405) est déformé au niveau de la première extrémité du tube de verre à double paroi (206) de telle sorte que la première extrémité du tube de verre à double paroi (206) est fermée de manière étanche à l'air.

8. Dispositif selon la revendication 7, le dispositif (300,400) présentant en outre :
un premier dispositif pneumatique (303),
un deuxième dispositif pneumatique (309),
dans lequel le premier dispositif pneumatique (303) est configuré de manière à déplacer le premier conducteur chauffant (202, 301, 401) en direction du deuxième conducteur chauffant (204, 302, 405), et
dans lequel le deuxième dispositif pneumatique (309) est configuré de manière à déplacer le deuxième conducteur chauffant (204, 302, 405) en direction du premier conducteur chauffant (202, 301, 401).

9. Dispositif selon la revendication 7 ou 8,
dans lequel les au moins deux conducteurs chauffants (202, 204, 301, 302, 401, 405) sont configurés de manière à réaliser un déplacement (311) pendant le chauffage par électroconduction de manière à obtenir la déformation et la fermeture du tube de verre à double paroi (206).
